# EUROPEAN PATENT APPLICATION

(11) **EP 4 825 539 A1**
(43) Date of publication of application: **21.10.2026**
(21) Application number: 25290016.2
(22) Date of filing: 14.04.2025
(51) Int. Cl.: B25J 9/16, B25J 9/08

(54) **MODULAR AUTONOMOUS ROBOTIC SYSTEM**

(71) Applicant: Hitachi, Ltd., Tokyo 100-8280 (JP)
(72) Inventor: Di Paola, Donato, 06560 Valbonne (FR); Holgado, Alexis, 06560 Valbonne (FR); Ogata, Takehito, 85445 Schwaig-Oberding (DE)
(74) Representative: MERH-IP Matias Erny Reichl Hoffmann Patentanwälte PartG mbB

(57) **Abstract**

The present subject matter relates to a module 400 for a robotic system 700, 800 comprising: a computational component 401 configured to exchange topological information associated with the module with a further module in the robotic system, a communication component 402 coupled to the computational component 401 and configured to allow communication of the module with the further module in the robotic system, a power component 403 coupled to the computational component 401 and the communication component 402, and at least one power-communication (PC) socket 404-1, ..., 404-6 arranged on a side of the module 400 connected to the power component 403 and the communication component 402.

## Description

The present disclosure relates to Autonomous Mobile Robots (AMR) and, in particular, relates to a modular autonomous mobile robotic system having multiple modules. The present disclosure also relates to modules having different functions which are to be integrated into a single robotic system and methods for exchanging information between the individual modules.

Autonomous Mobile Robots (AMR) have been widely used for a variety of purposes, such as manufacturing, warehouse management, transportation, search and rescue, cleaning, and even surgery. As these tasks are becoming more complex, Autonomous Mobile Robot (AMR) solutions for multi-tasking robotic systems require implementation of modules that perform complicated functions in conjunction with connection interfaces with high complexity.

However, adoption of the AMR solutions in industries and factories is currently limited by their costs, setup and maintenance efforts, and low adaptability to changes in usage. To cope with these issues, there is a need for a modular, flexible, re-configurable and evolving autonomous mobile robotic platform which can increase the sustainability of the adoption of AMRs, reducing the global cost for customers and increasing platform adaptability for various scenarios.

Accordingly, the focus of the present disclosure is to propose a re-configurable modular autonomous mobile robotic platform having multiple physical modules to improve flexibility of AMRs. In addition, it is desirable to design suitable modules for building a robotic system which provide different functions and capabilities to allow for performing multiple tasks in a cost-reduced and reconfigurable manner.

Patent Document #1 US 11,331,796 B2

Systems and methods for a universal connection interface between a robot and a plurality of modular attachments are disclosed. The connection interface includes a data connection and a dynamic amplifier configured to adjust output of at least one electromechanically coupled mechanical output; and a processor configured to control gain of the dynamic amplifier.

Patent Document #2 US 9,770,825 B2

A mobile robot system includes a plurality of mobile robots. Each robot has a predetermined size of large, medium, small or back packable. The mobile robot includes a chassis, drive system components, power components, a main processor, a communication system and a power and data distribution system. The chassis has a predetermined size of large, medium, small or back - packable. Drive system components are operably attached to the chassis and power components are operably connected to the drive system components and the power and data distribution system. The main processor, the communication system and the power and data distribution system are all operably connected together and operably connected to the traction components and the power components. The main processor, the communication system, and the power and data distribution system are all configured for use with the predetermined size of the chassis and at least one other size.

Patent Document #3 EP 2 807 526 B1

This present invention generally relates to mobile robots. In particular, the present invention is directed to mobile robots for handling job assignments in a physical environment inhabited by stationary and non-stationary obstacles.

Patent Document #4 KR20080113685A

A mobile robot system is provided to modularize the functions of a personal robot and establish organic connection environment and expandability between the modules through standardized H/W and S/W interface. A mobile robot system comprises a vision module which processes image data from a camera in order to extract the feature of an object, a sensor module which processes the signal from a sensor mounted on a robot, a mobile module which provides the robot with portability, and an interface module which performs determination based on the results from the vision module, the sensor module, and the mobile module and operates itself.

According to the needs as indicated above, the present disclosure proposes an Autonomous Mobile Robots (AMR) solution concerning devices (in particular modules and connectors) and methods for building a robotic system and for efficient reconfiguration of the robotic system.

An aspect of the disclosure relates to a module for a robotic system. The module may comprise a computational component, a communication component, a power component and at least one power-communication (PC) socket. Specifically, the computational component may be configured to exchange topological information associated with the module with a further module in the robotic system. In particular, the topological information may be indicative of one or more communication paths between the module and the further module for configuring the robotic system.

The communication component may be coupled to the computational component and configured to allow communication of the module with the further module in the robotic system. The power component may be coupled to the computational component and the communication component. In particular, the power component may be configured to deliver power to the computational component and the communication component and to distribute power between the module and the further module in the robotic system. Moreover, the at least one PC socket may be arranged on a side of the module connected to the power component and the communication component.

In particular, at least one side of the module may comprise at least one indentation to allow the module to be mechanically combined with the further module. Furthermore, and the computational component may be configured to exchange topological information associated with the module by:
- sending current topological information associated with the module via the at least one PC socket,
- receiving, via the at least one PC socket, further topological information from the further module, and
- updating the current topological information based on comparison of the current topological information with the further topological information.

Configured as above, the proposed module may exchange information with other modules via peer-to-peer communication scheme, which allows to map the structural connections of the modules in the robotic system to the message passing mechanism. In this way, when the topology (topological information) is discovered, the structure of the robot can also be obtained. This further allows for enhanced reconfigurability, flexibility and modularity of an AMR platform.

In some embodiments, the topological information may comprise a topology table including a Socket Identifier (SID) associated with the at least one PC socket of the module and a Universal Unique Identifier (UUID) associated with the module. More specifically, the SID may comprise a sender SID and a receiver SID, and the UUID may comprise a sender UUID and a receiver UUID.

In some embodiments, the computational component may be further configured to obtain a corresponding topology table for the updated current topological information by sorting the sender UUID and the receiver UUID based on a respective topology table of the current topological information and the received further topological information. Alternatively, or additionally, the computational component may be further configured to determine whether a number of the sender UUID and a number of the receiver UUID in the updated current topological information is equal to a number of modules in the robotic system. In a preferred embodiment, in response to determination that a number of the sender UUID and a number of the receiver UUID in the updated current topological information is equal to a number of modules in the robotic system, the computational component may be further configured to set a flag for a current iteration indicative of completion of the corresponding topology table for the updated current topological information.

In some embodiments, the exchange of the topological information may be repeatable and the computational component may be further configured to terminate the exchange of the topological information when a termination condition is met. More specifically, the termination condition can be met if the number of the sender UUID and the number of the receiver UUID in the updated current topological information is equal to the number of modules in the robotic system and/or the flag is set to indicate that the corresponding topology table for the updated current topological information is completed.

In some embodiments, the computational component may be further configured to compute, based on the updated current topological information, a shortest path for the communication between the module and the further module. Preferably, the computational component may be further configured to also create a temporary Shortest Path Table (SPT) based on the computed shortest path for each pair of the module and the further module. In particular, the temporary SPT may identify a respective source module and a respective destination module for each shortest communication path.

In a preferred embodiment, each shortest communication path may provide an ordered sequence of modules for transmitting a message from the respective source module to the respective destination module. More specifically, the message may comprise source priority information for the respective source module. Besides, the computational component may be further configured to forward two or more messages to respective destination modules based on the source priority information in the respective messages.

In a preferred embodiment, the computational component may be further configured to create a routing table by obtaining, from the SPT, information on a next module for forwarding the message to the respective destination module. For example, the routing table may further comprise destination priority information for the respective destination module. In some exemplary implementations, a plurality of messages may be exchanged between the modules, and each message may include source priority information for the respective (source) module. In such cases, the computational component may be further configured to forward two or more messages to respective destination modules based on the destination priority information for the respective destination modules in case that the source priority information in the respective messages is the same.

In some embodiments, at least one side of the module may comprise at least one protrusion for combining the module with the further module. Alternatively, or additionally, the module may be in a flat form. In particular, the module may have a cross-like shape. Specifically, the PC socket may be provided at a bottom side of the module.

In some embodiments, the module may have a geometric shape with a plurality of sides. In particular, one or more of the sides may have at least a PC socket. For example, the module may have a cuboid shape surrounded by six sides including a top side and a bottom side opposite to the top side. Furthermore, the module may have four pillars at four corner of the top side and four indentations at four corners of the bottom side. Also, the module may further comprise a motion component to be implemented as a motion module for the robotic system. In this case, one or more of the sides connected to the motion component may not have a PC socket.

In some embodiments, the module may further comprise at least one structural socket on each side of the module for mechanically combining the module with the further module. In some embodiments, the module may further comprise a locking means arranged on the PC socket and/or the structural socket for holding a connector in place to allow mechanical combination of the module with the further module.

Configured as above, functionalities of the individual modules can be provided in compact space, thereby minimizing the global structure of the robotic system and the required volume of the robot. Moreover, the use of the Topology Table (TT) allows for including all the information about the communication structure and the physical structure of the robot (by knowing which side of one module is connected to which side of another module) in the most compact format possible. Also, the use of the resulting Routing Table (RT) allows, for each module, for keeping the minimum amount of information to route the messages in the most efficient way in the given robot configuration, which can also minimize the data to store. Accordingly, improved sustainability of the adoption of AMRs can be achieved, thereby reducing the global cost for building a robotic system.

Another aspect of the disclosure relates to a connector for combining modules of a robotic system. The robotic system may be built by combining the modules as described above using one or more connectors as proposed in the present disclosure.

The proposed connector may comprise a main body having a cuboid shape. The connector may also comprise a plurality of grooves on a long side of the main body to allow the connector to be held in place by a locking mechanism provided by a module (similar to the module as described above) of the robotic system when the connector is inserted in the module.

In some embodiments, the connector may be released via an electro-actuated mechanism. In some embodiments, the connector may further comprise a connection interface on both sides of the connector for connecting each side of the connector to a power-communication (PC) socket on the module. In addition, the connector may further comprise a communication port and a power port to be coupled with the module. More specifically, the communication port may be configured to be coupled to a communication wire within the module via the PC socket, and the power port may be configured to be coupled to a power wire within the module via the PC socket. In a preferred embodiment, the connector may be a square-section connector.

Configured as above, incorporating the connection interface into the connector allows to minimize the connections requirements for communication and power. In other words, by incorporating the two types of connectors (i.e., with and without the connection interface) in a single element, rigidity of the structural combination of the modules can be improved.

Another aspect of the disclosure relates to a robotic system for performing multiple tasks. The robotic may comprises a plurality of modules as described above. Also, the robotic system may further comprise one or more connectors as described above. In particular, the one or more connectors may be configured to mechanically connect any two of the modules next to each other.

In some embodiments, the modules may comprise a plurality of first modules and a plurality of second modules. The first modules may have a geometric shape with a plurality of sides as described above. In particular, one or more of the sides may have at least a PC socket. For example, the module may have a cuboid shape surrounded by six sides including a top side and a bottom side opposite to the top side. Furthermore, the module may have four pillars at four corner of the top side and four indentations at four corners of the bottom side. Also, the module may further comprise a motion component to be implemented as a motion module for the robotic system. In this case, one or more of the sides connected to the motion component may not have a PC socket.

The second modules may be in a flat form and, in particular, may have a cross-like shape. Besides, the PC socket may be provided at a bottom side of the module.

Specifically, the one or more connectors may be configured to be inserted in one of bottom sockets on the sides or in one of external sockets on the top/bottom sides of the first modules. Additionally, and alternatively, the one or more connectors may be configured to be inserted in one of external sockets of the second modules.

In some embodiments, the first modules may comprise one or more of a motion module configured to provide a fully functioning motion capability, a power module configured to provide power for high-demanding hardware, and an actuation module configured to provide actuation capabilities for high-power demanding actuation tasks.

In some embodiments, the second modules may comprise one or more of a sensor module, a brain module, a battery module, an action module and a communication module.

Configured as above, the proposed robotic system can be provided in compact space with enhanced reconfigurability, flexibility and modularity. In particular, the proposed robotic system may be built with optimum structural connections of modules in the robotic system, which may be easily obtained using the topology (topological information) discovered.

As indicated above, the proposed AMR solution also allows for including information about the communication structure and the physical structure of a robot in the most compact format possible, and for keeping the minimum amount of information to route the messages in the most efficient way in the given robot configuration, thereby enabling the robot to perform multiple tasks in a cost-reduced and re-configurable manner.

Another aspect of the disclosure relates to a method of exchanging information between modules in a robotic system. The robotic system may comprise the modules as described as above. The method may comprise:
- sending current topological information associated with each of the modules,
- receiving further topological information from one or more further modules, and
- updating the current topological information based on comparison of the current topological information with the further topological information.

In some embodiments, the method may further comprise storing topological information comprising a topology table including a Socket Identifier (SID) associated with the at least one PC socket of each module and a Universal Unique Identifier (UUID) associated with each module. Specifically, the SID may comprise a sender SID and a receiver SID, and the UUID may comprise a sender UUID and a receiver UUID.

In some embodiments, the method may further comprise obtaining a corresponding topology table for the updated current topological information by sorting the sender UUID and the receiver UUID based on a respective topology table of the current topological information and the received further topological information.

In some embodiments, the method may further comprise determining whether a number of the sender UUID and a number of the receiver UUID in the updated current topological information is equal to a number of modules in the robotic system.

In a preferred embodiment, the method may further comprise, in response to determination that a number of the sender UUID and a number of the receiver UUID in the updated current topological information is equal to a number of modules in the robotic system, setting a flag for a current iteration indicative of completion of the corresponding topology table for the updated current topological information.

In some embodiments, the method may further comprise terminating the exchange of the topological information when a termination condition is met. Preferably, the termination condition may be met if the number of the sender UUID and the number of the receiver UUID in the updated current topological information is equal to the number of modules in the robotic system and/or the flag is set to indicate that the corresponding topology table for the updated current topological information is completed.

In some embodiments, the method may further comprise computing, based on the updated current topological information, a shortest path for the communication between each pair of the modules, and creating a temporary Shortest Path Table (SPT) based on the computed shortest path for each pair of the modules. Specifically, the temporary SPT may identify a respective source module and a respective destination module for each shortest communication path.

In a preferred embodiment, each shortest communication path may provide an ordered sequence of modules for transmitting a message from the respective source module to the respective destination module. Moreover, the message may comprise source priority information for the respective source module. In some embodiments, the method may further comprise forwarding two or more messages to respective destination modules based on the source priority information in the respective messages.

In some embodiments, the method may further comprise creating a routing table by obtaining, from the SPT, information on a next module for forwarding the message to the respective destination module. Preferably, the routing table may further comprise destination priority information for the respective destination module. In some embodiments, the method may further comprise forwarding two or more messages to respective destination modules based on the destination priority information for the respective destination modules in case that the source priority information in the respective messages is the same.

In view of the above, the present disclosure proposes a promising and future looking AMR solution which can enhance the reconfigurability, flexibility and modularity of a robotic system (e.g., a robot). It is particularly appreciated that the proposed modules, systems and methods can improve sustainability of the adoption of AMRs and also allow for efficient (re-)configurations of a robotic system with minimum global cost.

### Brief Description of the Drawings

Example embodiments of the disclosure are explained below with reference to the accompanying drawings, wherein like reference numbers indicate like or similar elements, and wherein
Fig. 1(a) schematically shows an isometric top view of an exemplary CUBE type module 100 according to embodiments of the present disclosure,
Fig. 1(b) schematically shows an isometric bottom view of an exemplary CUBE type module 100 according to embodiments of the present disclosure,
Fig. 2(a) schematically shows an isometric top view of an exemplary TOP type module 200 according to embodiments of the present disclosure,
Fig. 2(b) schematically shows an isometric bottom view of an exemplary TOP type module 200 according to embodiments of the present disclosure,
Fig. 3(a) schematically shows an isometric view of an exemplary structural rod connector 300 according to embodiments of the present disclosure,
Fig. 3(b) schematically shows a side view of the exemplary structural rod connector 300 according to embodiments of the present disclosure,
Fig. 4 schematically illustrates a hardware arrangement of an exemplary CUBE type module according to embodiments of the present disclosure,
Fig. 5 schematically illustrates a hardware arrangement of an exemplary TOP type module according to embodiments of the present disclosure,
Fig. 6(a) schematically shows a cross-section view of an exemplary power-communication rod connector (PCRC) 600 according to embodiments of the present disclosure,
Fig. 6(b) schematically shows a side view of the exemplary PCRC 600 according to embodiments of the present disclosure,
Fig. 7 schematically illustrates an example of combination of CUBE and TOP modules with PCRC and SRC connectors according to embodiments of the present disclosure,
Fig. 8 schematically illustrates an example of a robot resulting from combination of different classes of modules according to embodiments of the present disclosure,
Fig. 9 schematically shows a flowchart illustrating an example of a method 900 of the proposed Configuration Discovery Procedure for exchanging information between modules in a robotic system according to embodiments of the present disclosure,
Fig. 10 schematically illustrates an example of a discovered topology of an AMR configuration according to embodiments of the present disclosure.

### Detailed Description

In the following, embodiments of the present invention are described in detail with reference to exemplary figures. The features of the embodiments may be combined in whole or in part, and the present invention is not limited to the embodiments described. In the figures, identical elements are provided with identical reference signs, so that a repeated description of the elements is omitted unless necessary.

The present disclosure provides a robotic system comprising (composed of) multiple physical modules (e.g., structural/hardware with embedded software) into a single working Autonomous Mobile Robot (AMR), which is targeted for a specific application. Given a set of possible modules, multiple arrangements of the modules can be put in place. Specifically, a working arrangement may meet physical (e.g., structural/hardware) constrains. For example, a connection may be allowed for some modules but not possible for other modules. Additionally, or alternatively, a working arrangement may meet logical constraints. For example, a connection may be allowed if the global goal of the robot is met. As an example, a transporting robot with omnidirectional wheels may have a sensor on the side(s) to allow safe translation movement.

Based on the application requirements, different layouts/arrangements of modules for a robotic system can be built, among which there may be an optimum layout/arrangement prosed automatically to guarantee that the system is working while having the minimum number of modules. After the robotic system for an AMR is assembled, the robotic system may then be configured to ensure proper functioning of the system. The configuration may be determined based on an automatic discovery procedure, as proposed in the present disclosure, both on the geometrical (physical) and the logical sides, so that the AMR will be ready to perform autonomous operations without human intervention.

In the following an explementary robotic system and explementary modules for building a robotic system will be introduced in detail, in terms of their structural design and hardware components thereof, according to the embodiments of the present disclosure. Furthermore, an explementary configuration discovery system together with an explementary optimized communication system to allow for automatic discovery procedure and efficient communication between the modules in system configuration will be provided according to the embodiments of the present disclosure.

### Structural Design

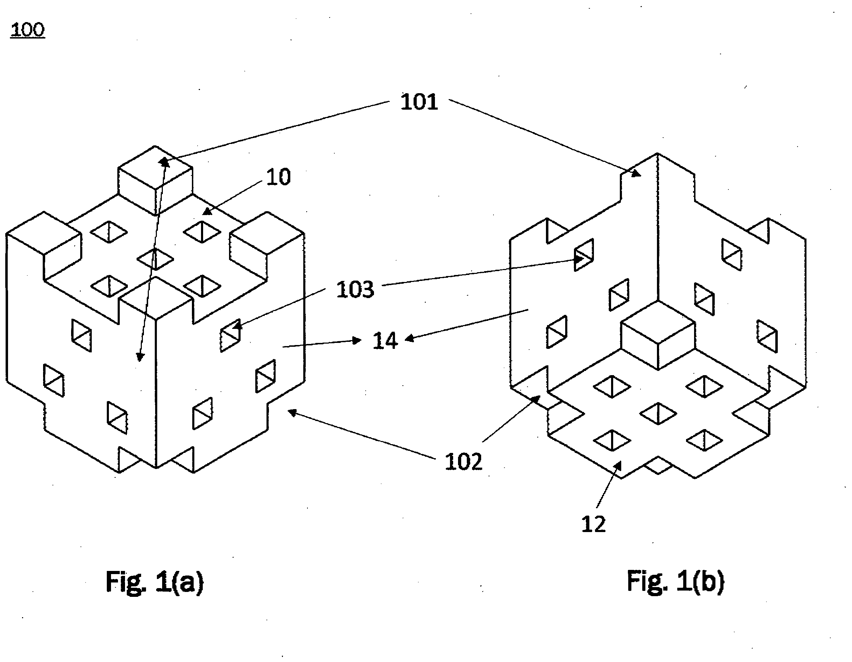

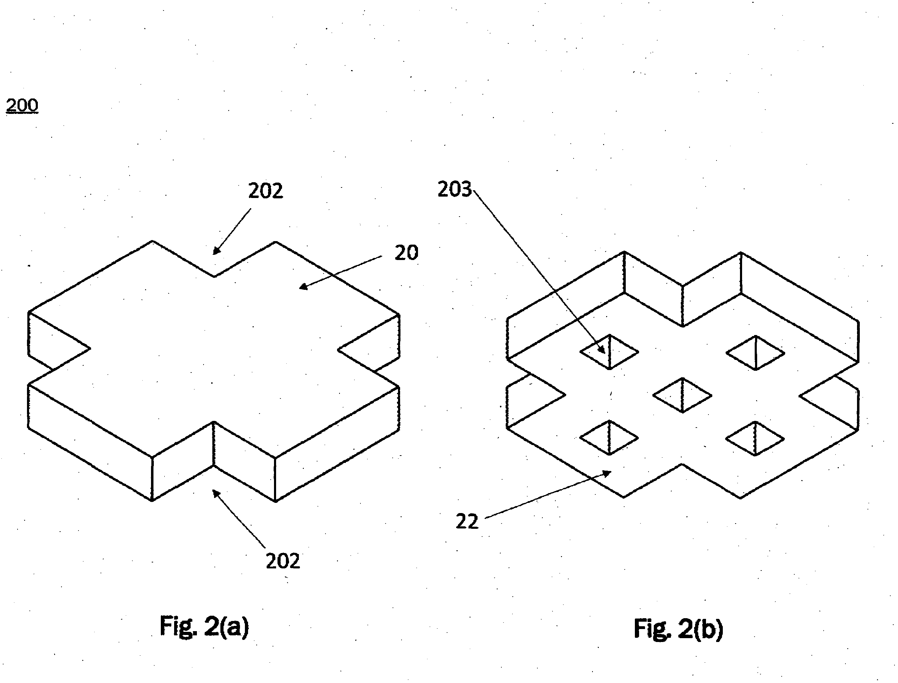

As indicated above, the module as proposed by the present disclosure may have at least one indentation on a side thereof to allow the module to be mechanically combined with other module(s). Such a module may be implemented in various geometric forms, as illustrated in Fig. 1 (the "CUBE" type module having a cube shape) and Fig. 2 (the "TOP" type module having a flat shape) in accordance with the embodiments of the present disclosure.

It is appreciated that the proposed types of modules are merely explementary and shall not be regarded limiting the implementation scope of the present disclosure. Other geometric shapes/forms are possible for manufacturing suitable modules for a robotic system according to the present disclosure.

Fig. 1(a) schematically shows an isometric top view of an exemplary CUBE type module 100 according to the embodiments of the present disclosure. Fig. 1(b) schematically shows an isometric bottom view of an exemplary CUBE type module 100 according to the embodiments of the present disclosure. As mentioned above, the CUBE module 100 is a structural module which can be used to build a robot. In this example, the CUBE module 100 is designed with a cubic shape with four protuberances (protrusions) 101 on on e (e.g., the top) side 10 and four holes (indentations) 102 on another (e.g., the bottom) side 12 to strengthen the structural connection among multiple CUBE modules stacked one over the other. Such design of the CUBE module 100 also allows to combine two or more CUBE modules via one or more structural sockets 103 on one or more of the four lateral sides 14 of the module. In this example, one CUBE module can be combined with four other CUBE modules on its lateral sides 14 and with two other CUBE modules on its top 10 and bottom sides 12. It is noted that the CUBE module as illustrated in Fig. 1 is merely for illustrative purpose. Other structural designs are also possible, e.g., the indentations may be located at the top side while the protrusions may be located at the bottom side, and/or e.g., the number of the protrusions/indentations may be arbitrary as long as the design allows to strengthen the structural connection of the CUBE module with other modules.

Fig. 2(a) schematically shows an isometric top view of an exemplary TOP type module 200 according to the embodiments of the present disclosure. Fig. 2(b) schematically shows an isometric bottom view of an exemplary TOP type module 200 according to the embodiments of the present disclosure. As mentioned above, the TOP module 200 is an additional module which can be connected with a CUBE module 100 (e.g., on the top side 10 of the CUBE module 100). In this example, the TOP module is designed to have a cross-like shape with four holes (indentations) 202 at the four corners to strength the structural connection between the TOP module 200 itself and the CUBE module 100. Similar to the CUBE module 100, the TOP module 200 may also have one or more structural sockets 203 on one (e.g., bottom) side 22 of the TOP module 200 to secure the connection with (the top side 10 of) the CUBE module 100. It is noted that the TOP module as illustrated in Fig. 2 is merely for illustrative purpose. Other structural designs are also possible, e.g., the one or more sockets 203 may be located at the top side 20 of the TOP module 200 for connecting the TOP module 203 with the CUBE module 100 if the bottom side of the CUBE module has the protrusions 101, instead. Also, the TOP module may have more or fewer indentations and/or the indentations may be located at different positions other than the corners as long as the design allows to strengthen the structural connection of the TOP module with other (CUBE) modules.

In this way, by combining the CUBE module 100 with the TOP module 200 using the proposed structurally securing mechanism, various functionalities can be provided in a compact space for the robotic system, thereby minimizing the size of a global structure and the required volume of a robot.

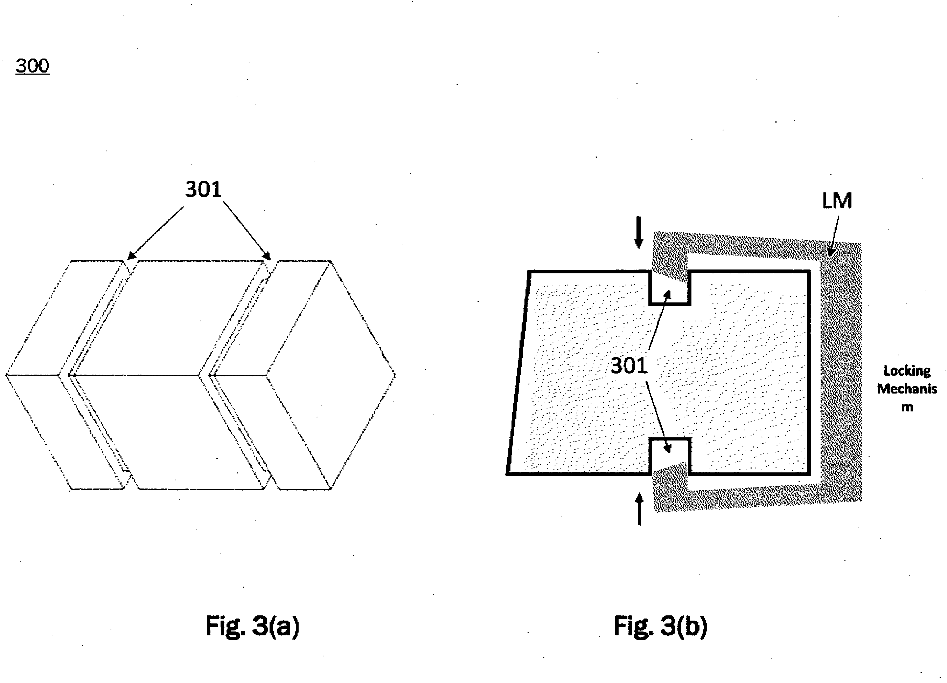

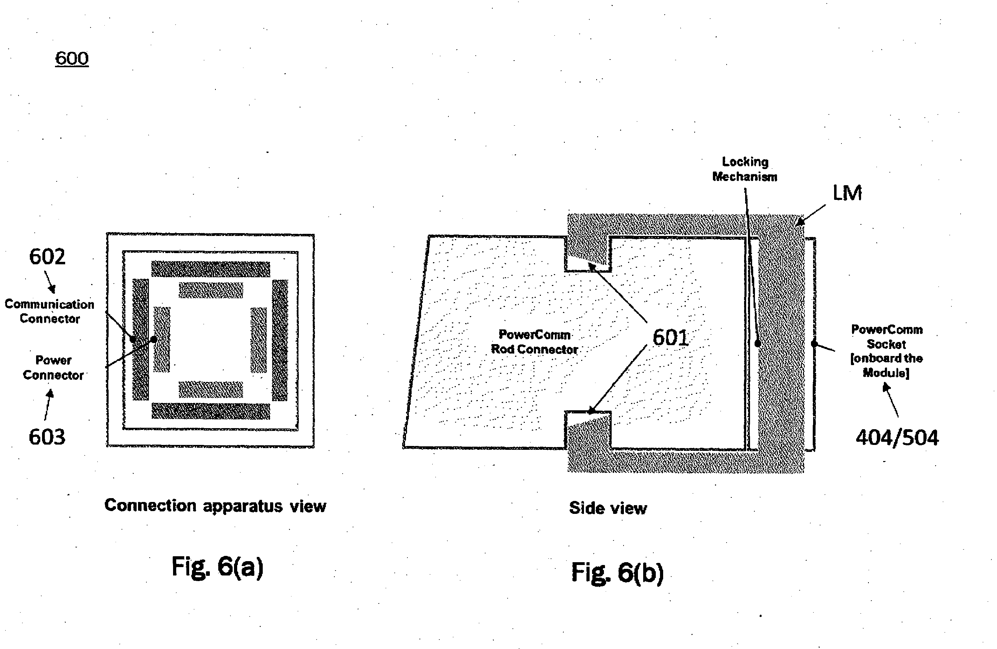

As mentioned above, a plurality of modules may be combined/connected to form a robotic system. The modules may be of the same type or different types. For example, a CUBE module may be combined with another CUBE module or with a TOP module. The combination, in particular, the structural connection between modules may be achieved via a connector as illustrated below in Fig. 3 for a pure structural connector (herein referred to as a "structural rod connector, SRC" and having a main body) and in Fig. 6 for a connector having a similar structure with an additional power-communication interface (herein referred to as a "power-communication rod connector, PCRC") in accordance with the embodiments of the present disclosure.

Fig. 3(a) schematically shows an isometric view of an exemplary structural rod connector 300 according to the embodiments of the present disclosure. Fig. 3(b) schematically shows a side view of the exemplary structural rod connector 300 according to the embodiments of the present disclosure. In this example, the SRC is a square-section connector having a cuboid shape as a main body for connecting multiple modules (e.g., one or more CUBE modules 100 and/or one or more TOP modules 200 as illustrative in Figs. 1 and 2, respectively). Specifically, the SRC further has two grooves 301 on both the long sides to allow a locking mechanism LM (which may be an external locking means provided by the module) to firmly hold the SRC in place, as shown in Fig. 3(b). For example, the SRC may be inserted in one of the bottom sockets 103 on the sides or in one of the external sockets 103 on the top/down sides of the CUBE module 100, and/or in one of the external sockets 203 of the TOP module 200.

In some embodiments, the SRC may be held in place by a locking mechanism LM that auto-locks when the SRC is inserted in the CUBE or the TOP module, and the SRC may then be released via an electro-actuated mechanism, as shown in Fig. 3. In some embodiments, the SRC may further include a power-communication interface to provide a power-communication rod connector (PCRC), as shown in Fig. 6. It is noted that the SRC as illustrated in Fig. 3 is merely for illustrative purpose. Other structural designs for an SRC are also possible. For example, the SRC may have more or fewer grooves 301 and/or be in other geometric shape with a cross section other than a square, as long as the design allows to secure the structural connection between modules.

Accordingly, the module as proposed by the present disclosure (e.g., the CUBE module 100 and the TOP module 200 in the foregoing examples) may also include a locking means LM correspondingly for holding a connector (e.g., a SRC or a PCRC) in place to allow mechanical/structural combination of the module with other module(s).

### Hardware Components

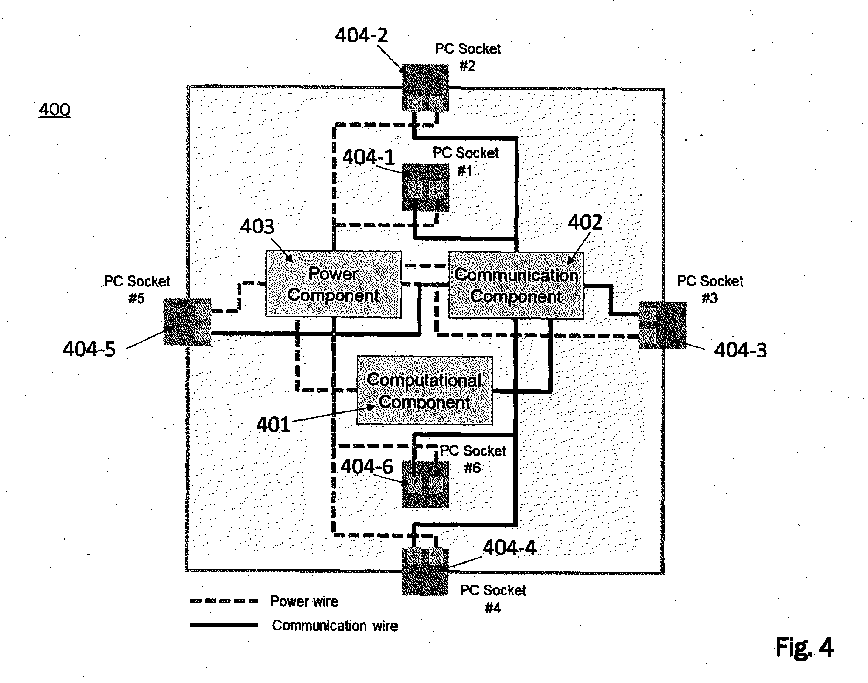

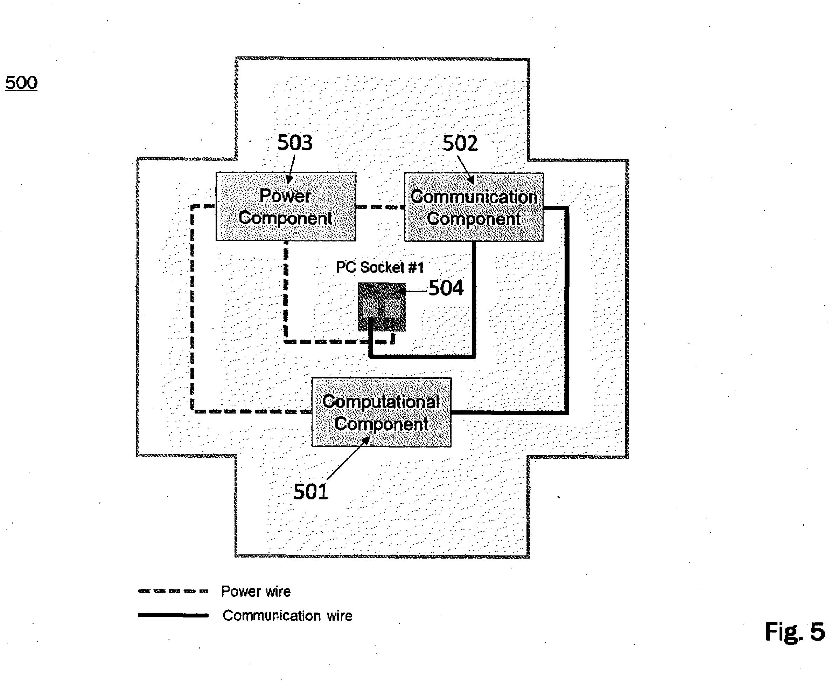

In order to allow the robotic system to perform tasks properly, each individual module may provide respective function(s) and may communicate (e.g., exchanging information) with other module(s). To this end, each individual module may contain corresponding hardware components as illustrated in Figs. 4 and 5 (for the CUBE module and the TOP module, respectively) based on its type and structural design in accordance with the embodiments of the present disclosure.

It is appreciated that the proposed hardware design of a module is merely explementary and shall not be regarded limiting the implementation scope of the present disclosure. Other hardware implementation options are possible which may depend on the structural type of the module and/or the functions to be performed by the module.

Fig. 4 schematically illustrates a hardware arrangement of an exemplary CUBE type module (e.g., the CUBE module 100 as shown in Fig. 1) according to the embodiments of the present disclosure. In this example, a CUBE module 400 comprises three main hardware elements: a computational component 401, a communication component 402, and a power component 403. The computational component 401 may include a basic microprocessor which provides functions of exchanging information with other modules (e.g., CUBE and/or TOP modules) and controlling the specific functions of the CUBE module 400. The computational component 401 is connected to the power component 403 and to the communication component 402. The communication module 402 may include a network board with a plurality of connectors attached to it. In the example shown in Fig. 4, six connectors are provided for the communication component 402 to allow interconnection between the communication component 402 and the computational component 401, interconnection between the communication component 402 and the power component 403 and interconnection between the communication component 402 and the respective power-communication (PC) sockets (404-1, ..., 404-6) of the CUBE module 400.

The communication component 402 is configured to allow data communications between the computational module 401 and other computational modules in other connected CUBE/TOP modules (via a communication wire as illustrated by the solid line and a respective PC socket). The power component 403 may include a power distribution board, which allows to deliver power (via a power wire as illustrated by the dashed line) to the computational and communication components 401, 402 and to further distribute power from/to other connected modules (via a power wire as illustrated by the dashed line and a respective PC socket).

In this way, communications and power distribution between multiple modules can be achieved, which allows to exchange information between the multiple modules in the robotic system. It is noted that the hardware arrangement of the CUBE module as illustrated in Fig. 4 is merely for illustrative purpose. Other arrangements/layouts of the above-mentioned components and PC sockets may be possible to achieve communications and power distribution between multiple modules. For example, the number of the PC sockets and/or the number of the power/communication components may vary depending on the structural design of the individual modules and how the modules are to be structurally connected.

Fig. 5 schematically illustrates a hardware arrangement of an exemplary TOP type module (e.g., the TOP module 200 as shown in Fig. 2) according to the embodiments of the present disclosure. Similar to the CUBE module 400, a TOP module 500 in this example comprises of three main hardware elements: a computational component 501, a communication component 502, and a power component 503. The functionalities of the three hardware elements are similar to those in the CUBE module 400 as described above, the details of which will be omitted for conciseness. The TOP module 500 also has a PC socket 504 via which communications and power distribution between the TOP module 500 and other connected modules can be achieved.

It is noted that the hardware arrangement of the TOP module as illustrated in Fig. 5 is merely for illustrative purpose. Similar to the above-described CUBE module 400, the number of the PC sockets and/or the number of the power/communication components in the TOP module 500 may vary depending on the structural design of the TOP module and how the TOP module is to be structurally connected to other modules.

As mentioned above, a connector may be used for combining/connecting a plurality of modules for building a robotic system. In particular, such a connector may be a power-communication connector having a power-communication interface for communication (e.g., information exchange) and power distribution between the modules in the system, as illustrated in Fig. 6.

Fig. 6(a) schematically shows a cross-section view of an exemplary power-communication rod connector (PCRC) 600 according to the embodiments of the present disclosure. Fig. 6(b) schematically shows a side view of the exemplary PCRC 600 according to the embodiments of the present disclosure. The PCRC 600 may be structurally similar or even identical to the SRC 300 as illustrated in Fig. 3, the details of which will be omitted for conciseness. In this example, the PCRC 600 also has two grooves 601 on both the long sides to allow a locking mechanism LM provided by an external (CUBE/TOP) module to firmly hold the PCRC 600 in place, as shown in Fig. 6(b). Specifically, the locking means LM may be arranged on the PC socket 404, 504 onboard the module 400, 500 to auto-lock the PCRC 600 when the PCRC 600 is inserted in the CUBE/TOP module 400, 500, and the PCRC 600 may then be released via an electro-actuated mechanism.

Compared to the SRC 300, the PCRC 600 further includes a connection interface on both sides that allows to connect each side of the PCRC 600 to a PC socket 404, 504 on the CUBE or TOP module 400, 500. The connection interface of the PCRC may comprise a communication connector 602 configured to be coupled to a communication port of the PC socket 404, 504 and a power connector 603 configured to be coupled to a power port of the PC socket 404, 504, as illustrated in Fig. 6(a). When the PCRC 600 is inserted in the CUBE/TOP module 400, 500, the communication connector 602 and the power connector 603 of the PCRC 600 can be connected to the data communication wire (solid lines as shown in Figs. 4 and 5) and the power wire (dashed lines as shown in Figs. 4 and 5) in the module, respectively, thereby allowing communication and power distribution between the module and other connected module(s).

Accordingly, by integrating the connection interface into a structural connector as a single connector element, the proposed PCRC 600 is able to minimize the connection requirements for data communication and power delivery while at the same time contributing to strengthen structural connections between the modules. It is noted that the PCRC as illustrated in Fig. 6 is merely for illustrative purpose. Other structural designs for a PCRC are also possible. For example, the PCRC may have more or fewer grooves 601 and/or be in other geometric shape with a cross section other than a square, as long as the design allows to secure the structural connection between modules. In addition, the arrangement of the communication connector 602 and the power connector 603 may vary depending on the arrangement of the corresponding data communication and power port of the PC socket onboard the module to into which the PCRC will be inserted.

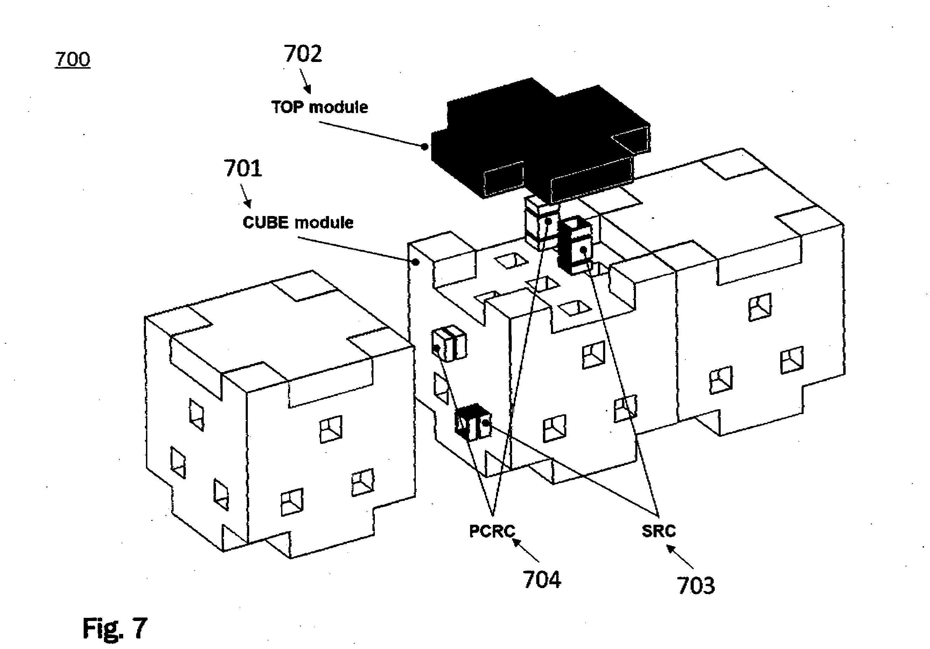

Accordingly, a robotic system for an AMR comprising (composed of) modules of different types may be implemented by combining or connecting the modules via one or more connectors such as the SRC 300 and PCRC 600 as shown in Figs. 3 and 6, respectively. An example of a composition (combination) of CUBE and TOP modules for a robotic system is schematically illustrated in Fig. 7 according to the embodiments of the present disclosure. As shown in the example of Fig. 7, a TOP module 702 is connected with a CUBE module 701 on the top side of the CUBE module 701 (where the indentations are located) via one or more SRCs 703 and one or more PCRCs 704. It is noted that the way of combination of the CUBE/TOP modules as illustrated in Fig. 7 is merely for illustrative purpose. Other arrangements of the modules and connectors are also possible.

As described above, many compositions of CUBE with CUBE modules and TOP with CUBE modules are possible. The way how the CUBE modules and TOP modules are to be combined may depend on the functionalities of the individual modules and the applications the robotic system is to perform. In any case, structural rigidity of the robotic system is ensured by the SRCs that are the main object to connect two modules. Moreover, PCRCs are used to allow modules to exchange information and distribute power, while contributing to the structural rigidity of the robotic system for a whole robot.

### Module Classes

As indicated above, each individual module may provide respective functions to enable the robotic system to perform multiple tasks properly. Accordingly, modules (e.g., the CUBE module and the TOP module as illustrated in Figs. 1, 2, 4, 5) forming a robotic system may be classified into different categories as described below depending on the respective functions provided. In particular, modules of different types may provide various functions due to their inherent physical/structural characteristics and/or the required specifications for a desired robotic system. In other words, a specific function or action of a robotic system for an AMR may be achieved by arranging the modules of different types/categories in an adequate manner.

For example, a generic CUBE module as described above may be specialized in the following classes:
- Motion Module: Being a motion module, a CUBE module may wrap motion hardware in a single physical box. This module may comprise an electric motor connected to a wheel, a motor control board along with the above mentioned default components of the CUBE module. Depending on the type of the wheel (e.g., normal, omnidirectional, ball-wheel) the motion module may be specialized in a specific type of motion. Thus, in combination with other motion modules, the resulting configuration will provide a fully functioning motion capability, e.g., differential drive, skid steering, omnidirectional motion, etc.
- Power Module: As a power module, a CUBE module may provide power for high-demanding hardware by wrapping a powerful battery pack in the CUBE module. The motivation behind this module is to increase the AMR global battery duration and to provide the right power for modules with more demanding physical, processing, and/or motion requirements.
- Actuation Module: As an actuation module, a CUBE module may provide actuation capabilities to the AMR for high-power demanding actuation tasks. This module may wrap motion hardware for actuation components, e.g., a robotic arm, on top of the CUBE module. In this case, this particular module may not allow other CUBE modules to be stacked on top of it.

For example, a generic TOP module as described above may be specialized in the following classes:
- Sensor Module: Being a sensor module, a TOP module may wrap sensing hardware, e.g., an RGB camera, a stereo-camera, an omni-camera, a 2D LiDAR, a 3D LiDAR, etc., in a physical box that can be installed in a CUBE bay. This module may comprise a sensor, a sensor-control board along with the above mentioned default components of the CUBE/TOP module. By leveraging the communication and power connections, the sensor module will get the needed power to run and will provide data to other modules of the AMR.
- Brain Module: As a brain module, a TOP module may wrap a computational board of the AMR. An AMR having any possible composition may comprise at least one brain module. Depending on the type of the computational board (e.g., CPU, multi-CPU, GPU, multi-GPU, etc.) the brain module may perform the necessary processing for the autonomous functions of the AMR (such as perception, navigation, control, and user interaction). By leveraging the communication and power connections, the brain module will get the needed power to run and will process the data received in order to control the AMR.
- Battery Module: As a battery module, a TOP module may provide power to most of the classes of modules by wrapping a battery pack in the TOP module. This is a basic module to provide power to the AMR. On the other hand, being a TOP module, a battery module can be easily removed from the AMR and substituted with a charged/new battery module, thereby preventing the AMR from stopping operations (i.e., interruption of operation) during the battery recharging time.
- Action Module: As an action module, a TOP module may provide low-power demanding actuation capabilities. Depending on the type of actuation mechanism (e.g., a lifting platform), the action module can be combined with other action module(s) to provide global actuation tasks for the AMR. For example, four lifting platforms on the four corners of the AMR can be used to lift and carry carts, pallets, etc. (typical warehouse scenario).
- Communication Module: As a communication module, a TOP module may wrap communication hardware to allow communication between the robot (AMR) and external environment. Depending on the type of communication protocols required, many different communication modules can be implemented for the AMR, e.g. Bluetooth, Wi-Fi, 4G/5G, etc.

Accordingly, by properly combining modules of different types and categories for building a robotic system, an AMR based on such a robotic system according to the present disclosure is able to perform autonomous operations without human intervention. In this way, a modular autonomous mobile robotic platform with improved flexibility can be achieved, which allows for performing multiple tasks in a cost-efficient manner.

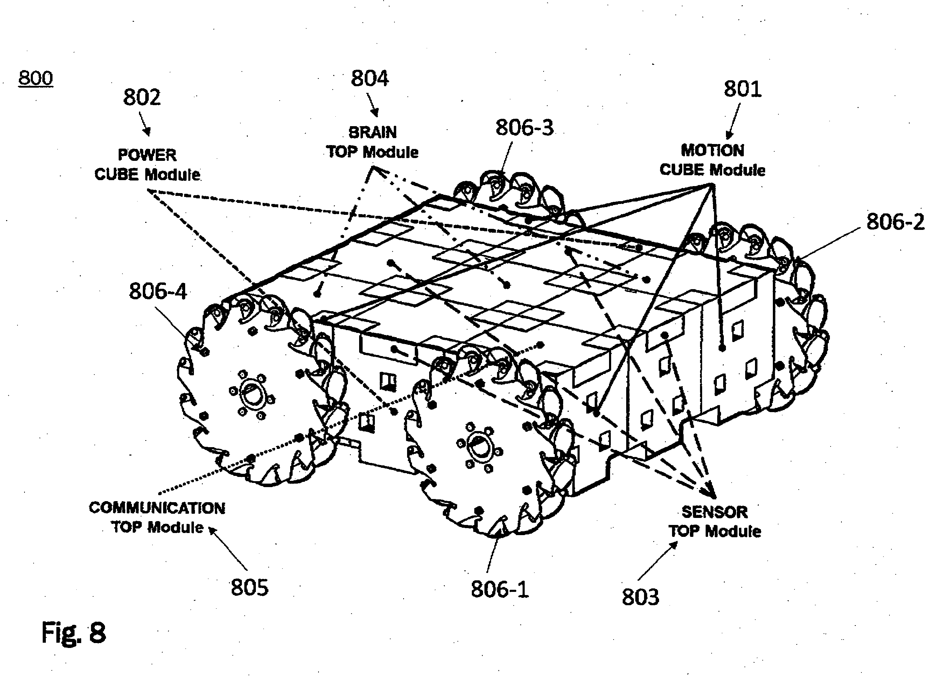

Fig. 8 schematically illustrates an example of possible working combination of modules designed in the proposed system according to the embodiments of the present disclosure. In this example, the robotic system 800 is a mobile robot base for performing transportation tasks. This combination comprises nine CUBE modules and nine TOP modules. Specifically, the system 800 comprises four motion CUBE modules 801 equipped with omnidirectional wheels at the four corners (806-1, ..., 806-4), two power CUBE modules 802 to power the entire robot, four sensor TOP modules 803 to obtain data about the environment from all the sides of the robot (since translation is possible with omnidirectional wheels, sensors may be preferably disposed on the sides), three brain TOP modules 804, two of which for processing data from sensors and one of which for controlling the robot navigation, one communication TOP module 805 for sending navigation command to the robot. The remaining three CUBE modules and one TOP module may be structural modules to keep the structural rigidity of the whole robot.

It is noted that the way of combination of the CUBE/TOP modules of different classes as illustrated in Fig. 8 is merely for illustrative purpose. Other arrangements of the modules of different classes providing respective functions are also possible.

### Configuration Discovery System

Another aspect focused by the present disclosure is to design an efficient configuration discovery system (CDS) to be implemented in the proposed robotic system for data communications between the modules.

The goal of the configuration discovery system (CDS) is to build a topology of the modules, namely, how the modules are connected and what is their spatial configuration, so that the geometry of the system is known, the sensor calibration can be automatically obtained, and the robot (e.g., the robotic system as illustrated in Figs. 7 and 8) has all the parameters to perform autonomous tasks. According to the embodiments of the present disclosure, the CDS may be based on a peer-to-peer communication scheme with bidirectional communications, so that each module of the system, through its sockets identified by a Socket Identifier (SID), can communicate with its neighboring modules. Based on the structure of the connections of each module (i.e., the structural connection of each module with other connected module(s)), the resulting communication network of all the modules composing the robot may form a connected topology (i.e., a message from one module can reach any other module). The benefit of the CDS is that, via the peer-to-peer communication scheme, the structural connections may be mapped to the message passing mechanism, so that when the topology is discovered the structure of the robot is also obtained.

It is assumed that each module (e.g., the CUBE or TOP module 400, 500 as described above) has a Universal Unique Identifier (UUID) to identify the module and its functionalities, among all existing modules in the robotic system (robot). It is also assumed that the number N of the modules that form/compose the robot is known before starting the configuration discovery system. This number N may be obtained in different ways: by explicitly requesting input to the system from a human user, or based on an automatic calculation by e.g., performing a decentralized network node counting algorithm. In the latter case, an All-2-All method can be used, which including having each node (e.g., a module) broadcast its UUID together with (all) other UUIDs that it has already received so far, in an iterative way.

For example, the information exchanged among the modules, during execution of the configuration discovery algorithm, includes the Topology Table (TT) structured as follows:

| | | | |
|---|---|---|---|
| SENDER-UUID | SENDER-SID | RECEIVER-UUID | RECEIVER-SID |

The benefit of the Topology Table (TT) is to include the information about the communication structure and the physical structure of the robot (by knowing which side of one module is connected to which side of another module) in the most compact format possible. According to an embodiment of the present disclosure, each row added may contain the information about the UUID and SID of the sender (a sending module), denoted as "SENDER-UUID" and "SENDER-SID", respectively, which represent the Universal Unique Identifier and the Socket Identifier of the sending module, and may also contain the information about the UUID and SID of the receiver (a receiving module), denoted as "RECEIVER-UUID" and "RECEIVER - SID", respectively, which represent the Universal Unique Identifier and the Socket Identifier of the receiving module.

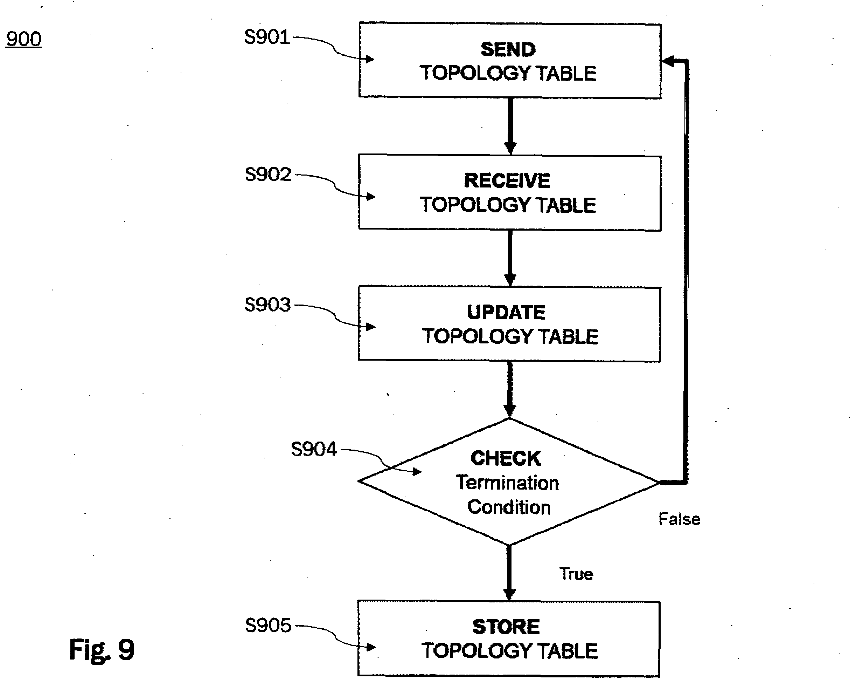

According to some embodiments of the present disclosure, the proposed configuration discovery algorithm may be summarized by the following procedure, as shown in the flow chart of Fig. 9, which may be performed in a decentralized fashion by each module in parallel. In other words, each module of the robotic system may (independently) perform the steps of Fig. 9 described as below (i.e., Step 1 to Step 5 as indicated by S901-S905). In particular, multiple iterations may be required to repeat Step 1 to Step 3 (S901-S903) as long as a termination condition is not met.

For the sake of clarity, in the following example the execution of the configuration discovery algorithm is described for the module having an UUID: "000".

Step 1 (S901): The module 000 sends the Topology Table (TT) via its sockets. At the first iteration the module may send the TT via all its sockets. Specifically, at the first iteration the module may send, for each Socket X, the following TT:

| SENDER-UUID | SENDER-SID | RECEIVER-UUID | RECEIVER-SID |
|---|---|---|---|
| 000 | X | | |

After the first iteration is completed, module 000 may discover (based on the received TT at Step 2) which sockets are "active", i.e., which sockets are attached to another module, then it will send the TT only to the active sockets.

Step 2 (S902): The module 000 receives the Topology Table (TT) from its sockets. Also in this step, because of the active connections, each module may receive messages only from some of its sockets (which are connected to other modules), e.g., the module 000 may receive, from its Socket X, the following TT sent by the module 999 from its Socket Y:

| SENDER-UUID | SENDER-SID | RECEIVER-UUID | RECEIVER-SID |
|---|---|---|---|
| 999 | Y | | |

It is noted that Socket X is one of the sockets of the module 000, while Socket Y is one of the sockets of the module 999.

Step 3 (S903): The module 000 updates the Topology Table (TT) by comparing the TT at the current iteration and the TTs received from the other modules. Then all the UUIDs of the sender and receiver are sorted, e.g., in each row and among all the rows. For example, the module 000 that received, from its Socket X, the TT sent by the module 999 from its Socket Y may update the TT as follows:

| SENDER-UUID | SENDER-SID | RECEIVER-UUID | RECEIVER-SID |
|---|---|---|---|
| 000 | X | 999 | Y |

Step 4 (S904): The module 000 checks the Termination Condition (TC). The TC is satisfied if the module 000 has obtained the complete Topology Table (TT), i.e., the number of unique UUIDs in both the SENDER-UUID column and the RECEIVER-UUID column of the Topology Table (TT) is equal to N, and if an internal flag (e.g., a STOP flag), initialized as False, is set to True. The former flag may be set to True at the iteration when the TT is completed. When TT is completed, a final iteration may happen in which the module 000 communicates the remaining information on the TT with the other modules. Thus, when both checks are passed, the TC is satisfied, and the repetition of Step 1 to Step 3 ends. The algorithm may then move to Step 5 (S905) as described below. On the other hand, if the TC is not satisfied, the algorithm goes to the next iteration, restarting from Step 1 (S901) as illustrated in Fig. 9.

Step 5 (S905): When the procedure of the algorithm is terminated, the Topology Table (TT) may be stored in a persistent memory of the module 000. Accordingly, this procedure guarantees that all the modules composing the robot will have the exact same TT obtained in a decentralized way.

It is noted that the aforementioned example of the proposed configuration discovery algorithm is merely for illustrative purpose. Other formats of the topology table and ways to terminate the iteration (rather than using a flag) are also possible.

Fig. 9 schematically shows a flowchart illustrating an example of a method 900 for exchanging information between modules in a robotic system (i.e., the proposed Configuration Discovery Procedure) according to embodiments of the present disclosure. The robotic system may comprise the modules as described as above, e.g., the modules 100, 200, 400, 500, which may form e.g., the robotic systems 700, 800 as described above.

In particular, method 900 may comprise, at step S901, sending current topological information (e.g., in a form of. a topology table as illustrated above) associated with each of the modules. Method 900 may further comprise, at step S902, receiving further topological information (e.g., in a form of a topology table as illustrated above) from one or more further modules. Method 900 may yet further comprise, at step S903, updating the current topological information based on comparison of the current topological information with the further topological information (e.g., comparison of the topology tables). It is noted that the topology tables may include a Socket Identifier (SID) associated with the at least one PC socket of each module and a Universal Unique Identifier (UUID) associated with each module. More specifically, the SID may comprise a sender SID and a receiver SID, and the UUID may comprise a sender UUID and a receiver UUID, as described above.

Method 900 may further comprise, at step S904, determining whether a termination condition is satisfied based on a number of the sender UUID and a number of the receiver UUID in the updated current topological information, and/or a flag set to indicate that the corresponding topology table for the updated current topological information is completed. Specifically, the termination condition may be satisfied if the number of the sender UUID and the number of the receiver UUID in the updated current topological information is equal to the number of modules in the robotic system and the flag is set to indicate that the corresponding topology table for the updated current topological information is completed.

When the termination condition is met, method 900 may terminate the exchange of the topological information as indicated by the operational steps S901 to S903, and may yet further comprise, at step S905, storing the updated topological information including e.g., an updated topology table. For example, a corresponding (updated) topology table for the updated current topological information may be obtained by sorting the sender UUID and the receiver UUID based on a respective topology table of the current topological information and the received further topological information. On the other hand, if the termination condition is not met, method 900 may then repeat the procedure of exchanging the topological information, i.e., by repeating the operational steps S901 to S903 as mentioned above.

In the following an example of implementing the proposed configuration discovery system to obtain a topology table of a robotic system is shown, which merely serves an illustrative purpose without limiting the implementation scope of the present disclosure. Other possible arrangements of the system having more or fewer number of modules and/or alternative physical/structural connections between the modules are also possible for conducting the proposed configuration discovery system according to the present disclosure.

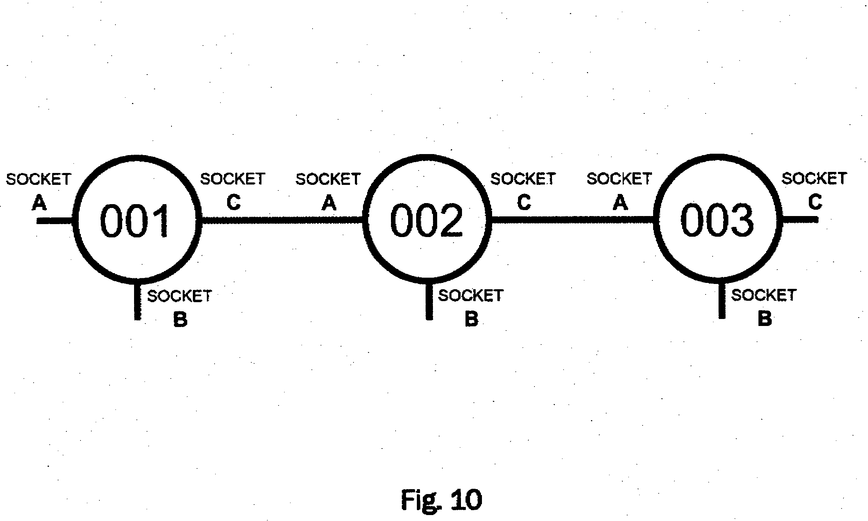

In the following example, three identical modules (Module ID: 001, 002, 003) are considered, each of which has three sockets (A, B, C). These modules compose/form a line topology for the robotic system, as illustrated in Fig. 10. In the exemplary topology shown in Fig. 10, module 001 is attached to module 002 which is further attached to module 003. The evolution of the Topology Table (TT) for the example of Fig. 10 during the iterations of the proposed algorithm is described as below:

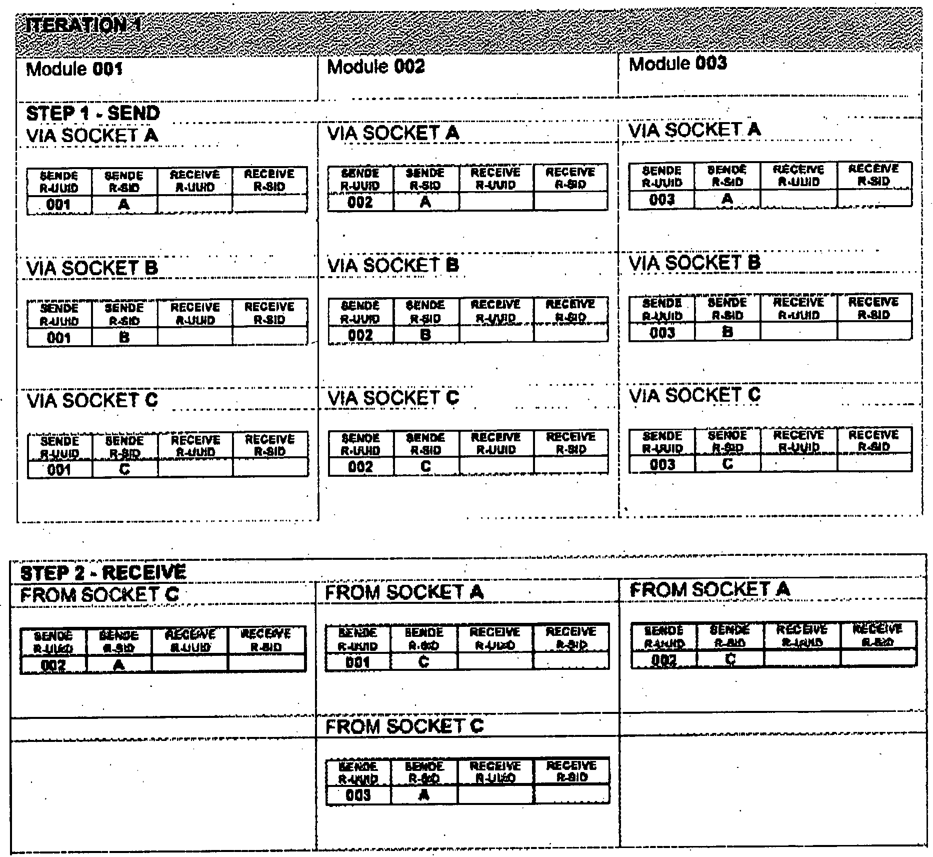

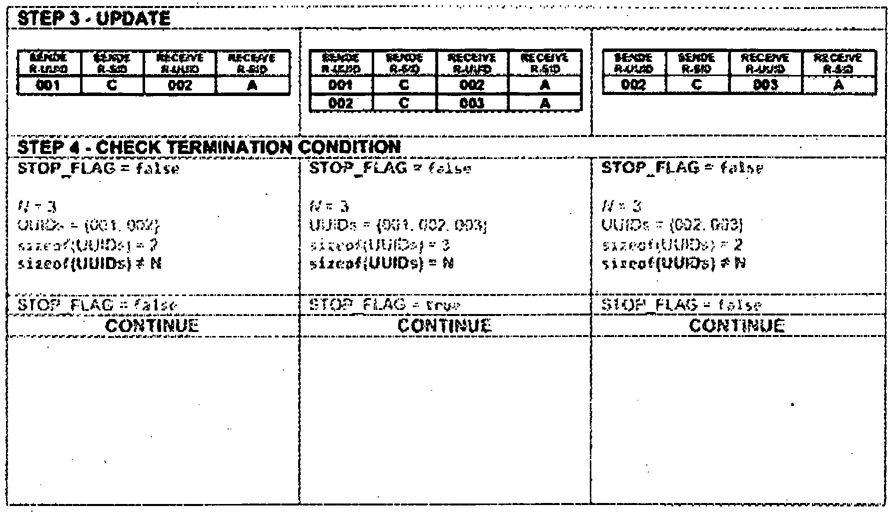

In Iteration 1, module 001 sends, at Step 1, the TT via its sockets A, B, C. The respective TT for Socket A, Socket B and Socket C contains the SENDER-UUID of the module 001 and the respective SIDs "A", "B" and "C". Similarly, module 002 and module 003 also send, at Step 1, the TT via their sockets A, B, C. The respective TT of module 002 and module 003 for the respective sockets A, B, C contains the respective SENDER-UUIDs and the respective SIDs via which the respective modules send the TT to other connected modules.

At Step 2, module 001, module 002 and module 003 receive the TT from its sockets. Because of the active connections (as shown in Fig. 10), module 001 may receive messages only from its Socket C, module 002 may receive messages only from its Socket A and Socket C, and module 003 may receive messages only from its Socket A.

At Step 3, module 001, module 002 and module 003 update the respective TT by comparing the TT at the current iteration (i.e., Iteration 1) and the TTs received from the other modules and sorting the UUIDs of the sender and receiver in each row and among all the rows. Accordingly, module 001 may update the TT as follows:

| SENDER-UUID | SENDER-SID | RECEIVER-UUID | RECEIVER-SID |
|---|---|---|---|
| 001 | C | 002 | A |

Module 002 may update the TT as follows:

| SENDER-UUID | SENDER-SID | RECEIVER-UUID | RECEIVER-SID |
|---|---|---|---|
| 001 | C | 002 | A |
| 002 | C | 003 | A |

Module 003 may update the TT as follows:

| SENDER-UUID | SENDER-SID | RECEIVER-UUID | RECEIVER-SID |
|---|---|---|---|
| 002 | C | 003 | A |

Subsequently at Step 4, module 001, module 002 and module 003 check the Termination Condition (TC) using an internal flag such as a STOP flag which is initialized as False (i.e., STOP_FLAG=false). In this example, the number of the modules in the system N is 3 (i.e., three modules). The respective TT obtained at the current iteration can be used for determining whether the TC is met. In the current iteration (iteration 1), the number of unique UUIDs in both the SENDER-UUID column and the RECEIVER-UUID column in the TT of module 001 is 2, the number of unique UUIDs in both the SENDER-UUID column and the RECEIVER-UUID column in the TT of module 002 is 3, and the number of unique UUIDs in both the SENDER-UUID column and the RECEIVER-UUID column in the TT of module 003 is 2. Since only the TT of module 002 is complete (i.e., the number of its UIDDs is equal to 3 which is also the number of the modules in the system), the STOP_FLAG for module 002 may be set to True at the iteration, and a final iteration then happens in which module 002 communicates the remaining information on the TT with the other modules. At this stage, the TC for all modules 001, 002 and 003 is not yet satisfied, and the algorithm will proceed to a further iteration.

In iteration 2, similar steps as for Iteration 1 are conducted. At Step 1, module 001, module 002 and module 003 send their updated TT to other modules via their active socket(s). In the same example, module 001 continues to send via its active Socket C the following updated TT:

| SENDER-UUID | SENDER-SID | RECEIVER-UUID | RECEIVER-SID |
|---|---|---|---|
| 001 | C | 002 | A |

Module 002 continues to send via its active Socket A and Socket C the following updated TT:

| SENDER-UUID | SENDER-SID | RECEIVER-UUID | RECEIVER-SID |
|---|---|---|---|
| 001 | C | 002 | A |
| 002 | C | 003 | A |

Module 003 continues to send via its active Socket A the following updated TT:

| SENDER-UUID | SENDER-SID | RECEIVER-UUID | RECEIVER-SID |
|---|---|---|---|
| 002 | C | 003 | A |

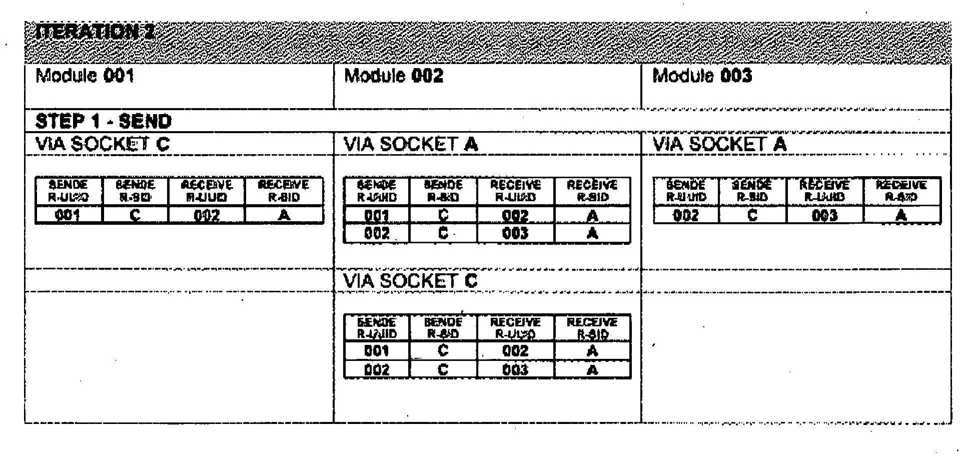

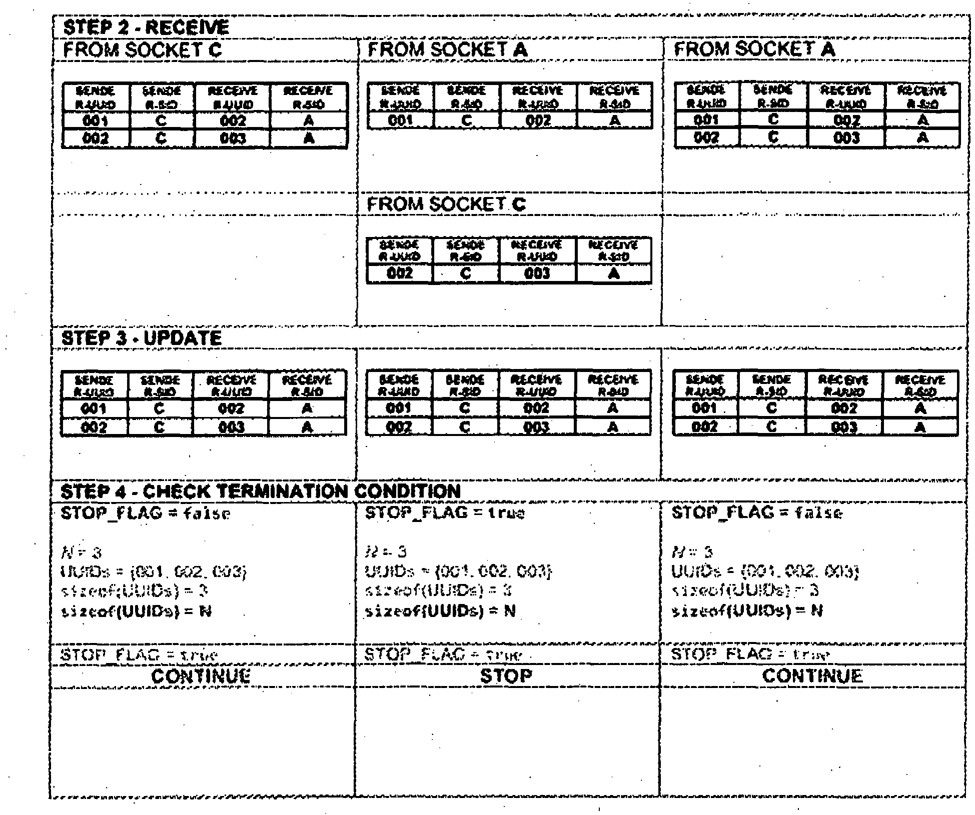

Subsequently, at Step 2, module 001 receives via its Socket C the updated TT of module 002, module 002 receives via its Socket A the updated TT of module 001 and via its Socket C the updated TT of module 003, and module 003 receives via its Socket A the updated TT of module 002. At Step 3, modules 001, 002 and 003 update their TT with the respective TTs received from other connected module(s). At Step 4, module 001, module 002 and module 003 again check whether the TC is met based on the similar procedure as indicated above for Iteration 1. Since the TT of module 002 is complete and the STOP_FLAG for module 002 has been set to True (at Iteration 1), the TC for module 002 is met and the iteration for module 002 ends. Module 002 proceeds further to Step 5 where the updated TT of module 002 is stored in a persistent memory of module 002. For modules 001 and 003, the number of unique UUIDs in both the SENDER-UUID column and the RECEIVER-UUID column in the TT of the respective modules 001 and 003 reaches the number of the modules in the system, which completes the respective TT. Accordingly, the STOP_FLAG for modules 001 and 003 is set to True at this iteration. However, the TC for modules 001 and 003 is not yet satisfied, and the algorithm will proceed to a further iteration for modules 001 and 003.

In iteration 3, only modules 001 and 003 send their updated TT to other module(s) at Step 1. Since module 002 has terminated the procedure, no TT can be received by modules 001 and 003 at Step 2 due to their physical/structural connections exclusively to module 002. Subsequently, modules 001 and 003 update the respective TTs and check the respective TCs. At this stage, the respective TT of modules 001 and 003 is complete and the respective STOP_FLAG for modules 001 and 003 has been set to True (at Iteration 2). Accordingly, the respective TC for modules 001 and 003 is met and the iteration for both modules 001 and 003 also ends. Both modules 001 and 003 proceed further to Step 5 where the updated TT of modules 001 and 003 is stored in a persistent memory of the respective modules 001 and 003.

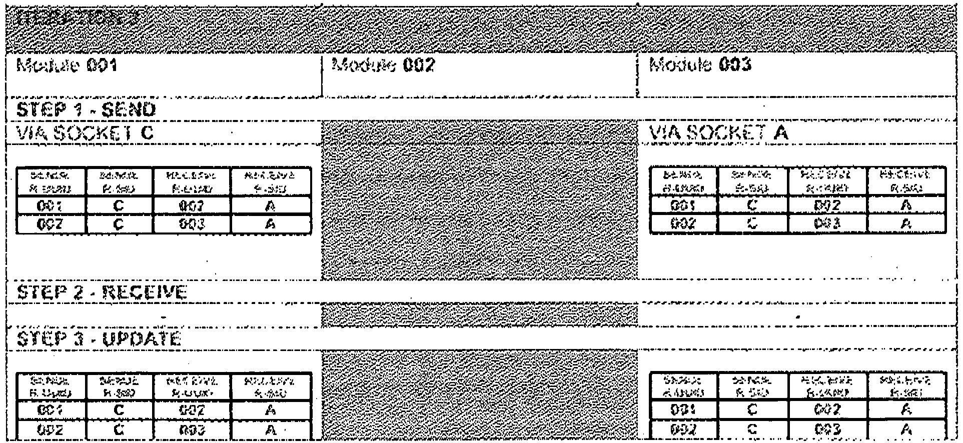

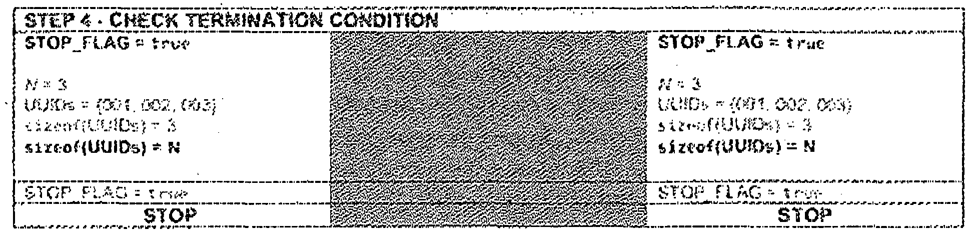

It is noted that the way of combination of the CUBE/TOP modules of different classes as illustrated in Fig. 8 is merely for illustrative purpose. Other arrangements of the modules of different classes providing respective functions are also possible.

It is noted that the aforementioned example of the proposed configuration discovery algorithm is merely for illustrative purpose. Other arrangements (rather than a line topology) of the modules are possible. Also, the number of iterations may vary depending on the physical/structural connections between the modules as long as the termination condition is satisfied for each individual module.

### Optimized Communication System

The proposed configuration discovery system may be further improved by providing optimum communication paths for exchanging information between the modules. This may be achieved by reducing communication delays between any pair of the modules according to the embodiments of the present disclosure.

In response to the discovery of the topology, each module may build a Routing Table (RT) to minimize communication delays between any pair of the modules. The computation of RT can be summarized by the following procedure, which is performed in a decentralized fashion by each module in parallel. For the sake of clarity, in the following example the execution of the computation algorithm is described for the module having an UUID: "000".

Step 1: From the Topology Table (obtained based on execution of the above-mentioned configuration discovery algorithm) which describes modules and connections, for each pair of modules the shortest path (i.e., the minimum number of modules a message needs to traverse to reach the destination module) is computed by e.g., using the Dijkstra's Algorithm. Accordingly, a temporary Shortest Path Table (SPT) can be built, which may be the same for every module in the robot. For example, the module 000 may compute the SPT as follows:

| DESTINATION-UUID | SHORTEST PATH |
|---|---|
| 999 | {000, 111, 222, 333, 777} |
| | |
| 222 | {111, 555, 333} |
| | |
| 777 | {333, 222, 000, 444} |
| | |

Herein the DESTINATION-UUID denotes the corresponding destination module of the respective shortest path. Also, each respective "SHORTEST PATH" lists a plurality of module UUIDs starting from the source module and giving the ordered sequence of modules for transmitting a message to reach the corresponding destination module (DESTINATION-UUID).

Step 2: In order to obtain the Routing Table (RT) from the Shortest Path Table (SPT), each module may keep the rows in the SPT that contain its own UUID as in the SHORTEST PATH, i.e., information related to its own UUID is kept, while omitting irrelevant information. Thus, to minimize the data to store, instead of keeping the full list of the SHORTEST PATH each module may only store the next module (denoted by "NEXT MODULE") to forward the message, which can be obtained from the SHORTEST PATH list. Furthermore, a Destination Priority Level (DPL) based on the UUID of the destination module can be applied to a given path. For example, messages going to the brain module may have higher priority than messages going to a battery module. Therefore, messages flagged with high priority values may be routed before messages with low priority values.

Continuing the example in the previous step for obtaining the SPT, starting from the module 000, the RT may be described as follows:

| DESTINATION-UUID | NEXT MODULE | Priority Level |
|---|---|---|
| 999 | 111 | 1 |
| 777 | 444 | 4 |
| | | |

Based on the above indicated SPT, the information related to module 000 as the source module includes "SHORTEST PATH" as "{000, 111, 222, 333, 777}" and "{333, 222, 000, 444}" for the destination modules 999 and 777, respectively. Accordingly, the next module may be module 111 and module 444 for the corresponding destination modules 999 and 777, respectively.

In this way, the resulting Routing Table (RT) has the benefit, for each module, of keeping the minimum amount of information to route the messages in the most efficient way in a given robot configuration. It is further appreciated that, compared to the Topology Table (TT), the Routing Table (RT) may be different for each module, since only the local information related to the module is kept.

It is noted that the aforementioned example of optimizing communication paths for exchanging information between the modules is merely for illustrative purpose. For example, the number of modules in the list of "SHORTEST PATH" may vary depending on the physical/structural connections between the modules in the robotic system.

### Message Routing Mechanism

There may be some cases where a module is about to forward two or more messages to respective destination modules. In such situations, the forwarding may be based on source priority information for the respective source modules (e.g., a Source Priority Level, SPL) in the respective messages or may be based on the destination priority information for the respective destination modules (e.g., a Destination Priority Level, DPL) as provided in the routing table (RT).

To ensure efficient information exchange between the modules, a Message Routing Procedure (MRP) is proposed according to the embodiments of the present disclosure. The MRP may leverage the aforementioned Routing Table (RT) and may include a two-step procedure as below:
Step 1: The UUID of the sending module (SOURCE-UUID) is checked for priority. In particular, the type of the source module as contained in the SOURCE-UUID is associated to a Source Priority Level (SPL). Thus, upon receiving two or more messages, the source-based priority flag may be used to rank the messages for forwarding.
Step 2: In case two or more messages have the same SPL, then the Destination Priority Level (DPL) may be used to discriminate this situation and update the message ranking for forwarding. It is noted that if two or more messages have the same SPL and DPL, which indicates that these messages may have the same priority, then a FIFO (first-in-first-out) or random approach may be used to rank the messages for forwarding.

It is appreciated that the proposed configuration discovery system allows for reconfigurability and flexibility of an autonomous mobile robotic system. In particular, by means of the proposed optimized communication system and the message routing mechanism, communications between the modules in the robotic system can become more efficient, and storage requirement may be reduced as well, thereby allowing for performing multiple tasks in a cost-reduced and re-configurable manner.

It is further appreciated that the proposed robotic system is enabled for performing a variety of complex tasks. In particular, by combining modules of different types (e.g., the CUBE modules and the TOP modules) and applying the above mentioned auto-discovery procedure (e.g., the proposed configuration discovery system with the above-described optimized communication system and message routing mechanism), the proposed robotic system according to the present disclosure can be configured to be the following types of AMR:
- Pickup and transportation robot in warehouses
- Towing robot
- Cleaning robot (vacuum and mopping)
- Guiding Robot (for human-robot interaction)
- Multiple robot systems, creating a single virtual robot (entity) without physical connections: picking and transport.

It is furthermore noted that examples of the present disclosure may take the form of an entirely hardware example, an entirely software example (including firmware, resident software, micro-code, etc.), or an example combining software and hardware aspects. Furthermore, examples of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects/examples are described hereinabove with reference to flowchart Illustrations and/or block diagrams of methods and apparatuses and the like. It will be understood that each block of the flowchart illustrations and/or block diagrams, and/or combinations of blocks in the flowchart illustrations and/or block diagrams can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

Communication networks generally may include public and/or private networks; may include local-area, wide-area, metropolitan-area, storage, and/or other types of networks; and may employ communication technologies including, but in no way limited to, analogue technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analogue technologies, digital technologies, optical technologies, wireless technologies (e.g., . Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the examples are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different examples or aspects described herein may be combined to form other examples.

## Claims

1. A module (400) for a robotic system, comprising:
a computational component (401) configured to exchange topological information associated with the module (400) with a further module in the robotic system, the topological information indicative of one or more communication paths between the module (400) and the further module for configuring the robotic system,
a communication component (402) coupled to the computational component (401) and configured to allow communication of the module (400) with the further module in the robotic system,
a power component (403) coupled to the computational component (401) and the communication component (402), the power component (403) configured to deliver power to the computational component (401) and the communication component (402) and to distribute power between the module (400) and the further module in the robotic system, and
at least one power-communication, PC, socket (404) arranged on a side of the module (400) connected to the power component (403) and the communication component (402),
wherein at least one side of the module (400) comprises at least one indentation to allow the module (400) to be mechanically combined with the further module, and wherein the computational component (401) is configured to exchange topological information associated with the module (400) by:
sending current topological information associated with the module (400) via the at least one PC socket (404),
receiving, via the at least one PC socket (404), further topological information from the further module, and
updating the current topological information based on comparison of the current topological information with the further topological information.

2. The module of claim 1, wherein the topological information comprises a topology table including a Socket Identifier, SID, associated with the at least one PC socket (404) of the module (400) and a Universal Unique Identifier, UUID, associated with the module (400), the SID comprising a sender SID and a receiver SID, the UUID comprising a sender UUID and a receiver UUID.

3. The module of claim 2, wherein, in response to determination that a number of the sender UUID and a number of the receiver UUID in the updated current topological information is equal to a number of modules (400) in the robotic system, the computational component (401) is further configured to set a flag for a current iteration indicative of completion of a corresponding topology table for the updated current topological information.

4. The module of any of the previous claims, wherein the exchange of the topological information is repeatable and the computational component (401) is further configured to terminate the exchange of the topological information when a termination condition is met.

5. The module of claim 4 depending on claim 3, wherein the termination condition is met if the number of the sender UUID and the number of the receiver UUID in the updated current topological information is equal to the number of modules (400) in the robotic system and the flag is set to indicate that the corresponding topology table for the updated current topological information is completed.

6. The module of any of the previous claims, wherein the computational component (401) is further configured to compute, based on the updated current topological information, a shortest path for the communication between the module and the further module, and to create a temporary Shortest Path Table (SPT) based on the computed shortest path for each pair of the module and the further module, the temporary SPT identifying a respective source module and a respective destination module for each shortest communication path.

7. The module of any of the previous claims, wherein at least one side of the module (400) comprises at least one protrusion for combining the module (400) with the further module.

8. The module of any of the previous claims, wherein the module (400) is in a flat form and has a cross-like shape, and wherein the PC socket is provided at a bottom side of the module (400).

9. The module of any of claims 1 to 7, wherein the module (400) has a cuboid shape surrounded by six sides including a top side and a bottom side opposite to the top side, wherein the module (400) has four pillars at four corner of the top side and four indentations at four corners of the bottom side.

10. The module of any of the previous claims, further comprising at least one structural socket on each side of the module (400) for mechanically combining the module (400) with the further module, and optionally a locking means arranged on the PC socket and/or the structural socket for holding a connector in place to allow mechanical combination of the module (400) with the further module.

11. A connector for combining modules of a robotic system, comprising:
a main body having a cuboid shape, and
a plurality of grooves (301) on a long side of the main body to allow the connector (300) to be held in place by a locking mechanism (LM) provided by a module (400) of the robotic system (700, 800) when the connector (300) is inserted in the module (400).

12. The connector of claim 11, wherein the connector (300) is released via an electro-actuated mechanism.

13. The connector of claim 11 or 12, further comprising a connection interface on both sides of the connector (300) for connecting each side of the connector (300) to a power-communication, PC, socket (404) on the module (400).

14. The connector of claim 13, further comprising a communication port configured to be coupled to a communication wire within the module via the PC socket and a power port configured to be coupled to a power wire within the module via the PC socket.

15. A robotic system comprising:
a plurality of modules (100, 200, 400, 500) according to any of claims 1 to 10, and
one or more connectors (300) according to any of claims 11 to 14, the one or more connectors (300) configured to mechanically connect any two of the modules next to each other.

16. The system of claim 15, wherein the modules (100, 200, 400, 500) comprise a plurality of first modules according to claim 8 and a plurality of second modules according to claim 9, wherein the one or more connectors (300) are configured to be inserted in one of bottom sockets on the sides or in one of external sockets on the top/bottom sides of the first modules, and in one of external sockets of the second modules.

17. A method of exchanging information between modules (100, 200, 400, 500) according to any of claims 1 to 10 in a robotic system (700, 800), comprising:
sending current topological information associated with each of the modules (100, 200, 400, 500),
receiving further topological information from one or more further modules (100, 200, 400, 500), and
updating the current topological information based on comparison of the current topological information with the further topological information.

18. The method of claim 17, further comprising storing topological information comprising a topology table including a Socket Identifier (SID) associated with the at least one PC socket of each module and a Universal Unique Identifier (UUID) associated with each module, the SID comprising a sender SID and a receiver SID, the UUID comprising a sender UUID and a receiver UUID, and optionally, in response to determination that a number of the sender UUID and a number of the receiver UUID in the updated current topological information is equal to a number of modules in the robotic system, setting a flag for a current iteration indicative of completion of a corresponding topology table for the updated current topological information.

19. The method of claim 17 or 18, further comprising terminating the exchange of the topological information when a termination condition is met.

20. The method of claim 19 depending on claim 18, wherein the termination condition is met if the number of the sender UUID and the number of the receiver UUID in the updated current topological information is equal to the number of modules (100, 200, 400, 500) in the robotic system (700. 800) and the flag is set to indicate that the corresponding topology table for the updated current topological information is completed.
